(19) Europäisches Patentamt / European Patent Office / Office européen des brevets

(11) EP 4 660 724 A1

(12) EUROPÄISCHE PATENTANMELDUNG

(43) Veröffentlichungstag:
10.12.2025 Patentblatt 2025/50

(21) Anmeldenummer: 24179859.4

(22) Anmeldetag: 04.06.2024

(51) Internationale Patentklassifikation (IPC):
G05B 19/042 (2006.01)

(52) Gemeinsame Patentklassifikation (CPC):
G05B 19/042; G05B 2219/31324

(84) Benannte Vertragsstaaten:
AL AT BE BG CH CY CZ DE DK EE ES FI FR GB
GR HR HU IE IS IT LI LT LU LV MC ME MK MT NL
NO PL PT RO RS SE SI SK SM TR
Benannte Erstreckungsstaaten:
BA
Benannte Validierungsstaaten:
GE KH MA MD TN

(71) Anmelder: Siemens Aktiengesellschaft
80333 München (DE)

(72) Erfinder:
• Hog, Ronny
92245 Kümmersbruck (DE)
• Schweiger, Julia
92242 Hirschau (DE)
• Schötz, Sebastian
92256 Hahnbach (DE)
• Walter, Markus
96050 Bamberg (DE)

(74) Vertreter: Siemens Patent Attorneys
Postfach 22 16 34
80506 München (DE)

(54) **VERFAHREN ZUM BEREITSTELLEN EINER SICHEREN ZEITBASIS FÜR EIN STEUERPROGRAMM**

(57) Die Erfindung betrifft ein Verfahren zum Bereitstellen einer sicheren Zeitbasis für ein Steuerprogramm (211, 212) zum Betrieb einer steuerbaren Maschine (100), welche eine interne Steuereinheit (110) zur Steuerung der Maschine (100) umfasst, wobei das Steuerprogramm (211, 212) auf einer externen Recheneinheit (200) ausgeführt wird, die über eine Kommunikationsverbindung eines Kommunikationsnetzwerks (150) zum Übertragen von Informationen für die Steuerung der Maschine (100) mit der internen Steuereinheit (110) verbunden ist. In dem Verfahren werden dem Steuerprogramm (211, 212) eine erste Zeitbasis (ZB1) von einer internen Uhr (220) der externen Recheneinheit (200) sowie eine zweite Zeitbasis (ZB2), die unabhängig von der ersten Zeitbasis (ZB1) ist, von einer internen Uhr (231, 320) einer Netzwerkkomponente (230, 300) des Kommunikationsnetzwerks (150) bereitgestellt.

FIG 1

**Beschreibung**

Die Erfindung betriff ein Verfahren zum Bereitstellen einer sicheren Zeitbasis für ein Steuerprogramm, ein Computerprogrammprodukt sowie eine steuerbare Maschine.

Von steuerbaren Maschinen, wie z.B. führerlosen Transportsystemen (AGV, englisch: Automated Guided Vehicles), Robotern, Werkzeugmaschinen, Produktionsmaschinen, chemischen oder verfahrenstechnischen Produktions- und Prozess-Steuerungssystemen, geht bei Fehlfunktionen oder einer absichtlich herbeigeführten Manipulation eine Gefährdung aus, welche sowohl Schaden in der Umgebung der Maschine als auch an Menschen verursachen kann.

Die Steuerung der Maschine soll in Zukunft mit virtualisierten Steuerungsfunktionen, z.B. virtualisierten Automatisierungsfunktionen, erfolgen, welche durch externe Recheneinheiten ausgeführt werden, die räumlich von der zu steuernden Maschine getrennt angeordnet sind. Eine Kommunikation zwischen der externen Recheneinheit und der Maschine erfolgt hierzu über eine drahtlose oder leitungsgebundene Kommunikationsverbindung eines Kommunikationsnetzwerks. Diese Architektur hat zur Folge, dass für die Realisierung einer sicheren Zeitbasis für ein Steuerprogramm, das auf der externen Recheneinheit ausgeführt wird und zum sicheren Betrieb der steuerbaren Maschine erforderlich ist, Lösungen gefunden werden müssen. Die sichere Zeitbasis wird auch als Zeitfunktion bezeichnet.

Die Realisierung einer sicheren Zeitbasis, die z.B. Anwenderzeiten, wie Einschaltverzögerung, Überwachungszeit oder eine F-Zyklus-Zeitüberwachung, umfasst, erfolgt über zwei Timer. Die Timer müssen unabhängig voneinander ausgeführt werden, was durch die Nutzung eigener, unabhängiger Quarze sichergestellt wird. In der Vergangenheit war dies möglich, da die Steuerprogramme auf speicherprogrammierbaren Steuerungen (SPS) bekannter Hardware ausgeführt wurden, bei denen zwei unabhängige Quarze (System-Quarz und RTC-Quarz) als interne Uhren vorgesehen wurden.

Durch die Verlagerung des Steuerprogramms auf eine externe Recheneinheit kann nicht sichergestellt werden, dass zwei voneinander unabhängige Timer vorhanden sind. Typischerweise wird die externe Recheneinheit nicht vom Betreiber der steuerbaren Maschine bereitgestellt und verwaltet, wodurch auch keine Informationen über die auf der externen Recheneinheit gegebenen Hardwarekomponenten vorliegen.

Es ist Aufgabe der Erfindung, ein verbessertes Verfahren anzugeben, mit dem eine sichere Zeitbasis für ein auf einer externen Recheneinheit ablaufendes Steuerprogramm auf einfache und zuverlässige Weise bereitgestellt werden kann. Eine weitere Aufgabe der Erfindung besteht darin, eine steuerbare Maschine anzugeben, welche dazu ausgebildet ist, das erfindungsgemäße Verfahren zu nutzen.

Diese Aufgaben werden gelöst durch ein Verfahren gemäß den Merkmalen des Anspruches 1, ein Computerprogrammprodukt mit den Merkmalen des Anspruches 14 sowie eine steuerbare Maschine mit den Merkmalen des Anspruches 15. Vorteilhafte Ausgestaltungen ergeben sich aus den abhängigen Ansprüchen.

Gemäß einem ersten Aspekt der Erfindung wird ein Verfahren zum Bereitstellen einer sicheren Zeitbasis für ein Steuerprogramm zum Betrieb einer steuerbaren Maschine vorgeschlagen. Unter einer steuerbaren Maschine sind im Allgemeinen im Industrieumfeld eingesetzte Maschinen oder Geräte oder Komponenten zu verstehen, wie z.B. beliebige Aktoren, führerlose Transportsysteme, Roboter, Werkzeugmaschinen, Produktionsmaschinen, chemische oder verfahrenstechnische Prozesssteuerungssystemen, usw. Zu diesem Zweck kann eine jeweilige Maschine mindestens eine zu steuernde Maschineneinheit mit einem oder mehreren Sensoren und/oder einem oder mehreren Aktoren umfassen.

Die zu steuernde Maschineneinheit kann beispielsweise ein Roboterarm, eine Antriebseinheit, ein pneumatisches System, usw. sein oder umfassen. Als Aktor kann beispielsweise ein Motor, ein pneumatischer oder elektrischer Zylinder, ein Gebläse, usw. vorgesehen sein. Der oder die Sensoren der Maschineneinheit dienen dazu, eine Zustandsinformation über einen jeweiligen Aktor (z.B. eine Drehzahl, eine aktuelle Information über einen Weg, eine Kraft, eine Geschwindigkeit, usw.) oder eine Prozessinformation (z.B. eine aktuelle Information über einen Druck, eine Temperatur, eine Feuchtigkeit, usw.) zu erfassen und für die Steuerung als Ist-Information bereitzustellen.

Die steuerbare Maschine umfasst eine interne Steuereinheit zur Steuerung der Maschine. In einem Normalbetrieb wird die Maschine durch die interne Steuereinheit mit einer Maschinensteuerungsfunktion gesteuert, deren Parameter und/oder Steuerkommandos die interne Steuereinheit von dem Steuerprogramm, das auf einer externen Recheneinheit abläuft, empfängt. Zu diesem Zweck ist die externe Recheneinheit über eine Kommunikationsverbindung eines Kommunikationsnetzwerks zum Übertragen von Informationen für die Steuerung der Maschine mit der internen Steuereinheit verbunden.

Die externe Recheneinheit ist kein integraler Bestandteil der Maschine, sondern insbesondere dazu ausgebildet, eine virtualisierte Steuerungsfunktion, z.B. eine virtualisierte Automatisierungsfunktion, auszuführen. Die externe Recheneinheit kann ein sog. Edge-Gerät sein oder in einem, insbesondere Cloud-basierten, Rechenzentrum realisiert sein.

Zur Bereitstellung einer sicheren Zeitbasis für das auf der externen Recheneinheit ausgeführte Steuerprogramm wird dem Steuerprogramm eine erste Zeitbasis von einer internen Uhr der externen Recheneinheit bereitgestellt. Da das Steuerprogramm auf einer Hardware laufen muss, nämlich der externen Recheneinheit, ist immer sichergestellt, dass mindestens eine interne Uhr, z.B. ein System-Quarz, vorhanden ist und als erste Zeitbasis genutzt werden kann. Die erste Zeitbasis kann beispielsweise ein Time Stamp Counter eines Prozessors der externen Recheneinheit sein.

Da nicht vorausgesetzt werden kann, dass die externe Recheneinheit auch über eine zweite, von der ersten Zeitbasis unabhängigen Zeitbasis verfügt, sieht das Verfahren vor, dem Steuerprogramm eine zweite Zeitbasis, die unabhängig von der ersten Zeitbasis ist, bereitzustellen, und zwar von einer internen Uhr einer Netzwerkkomponente des Kommunikationsnetzwerks. Eine solche Netzwerkkomponente des Kommunikationsnetzwerks kann insbesondere eine Netzwerkkarte oder eine andere externe Recheneinheit, die mit der externen Recheneinheit über das Kommunikationsnetzwerk verbunden ist, oder ein sog. PTP-Grandmaster sein.

Wenn von einer zweiten Zeitbasis, die unabhängig von der ersten Zeitbasis ist, die Rede ist, so ist dies derart zu verstehen, dass die erste Zeitbasis und die zweite Zeitbasis nicht miteinander synchronisiert sind.

Die Bereitstellung der zweiten, unabhängigen Zeitbasis mittels einer Netzwerkkomponente, die mit der externen Recheneinheit datentechnisch verbunden ist, nutzt insbesondere eine standardisierte Schnittstelle IEEE 1588 des PTP-Netzwerkprotokolls unter Linux. Durch die immer höheren Anforderungen der Zeitsynchronisation und Genauigkeit in Netzwerken unterstützen verschiedene Netzwerkkomponenten, insbesondere Netzwerkkarten, die Bildung einer Zeit über einen internen Hardware-Quarz. Diese wird als zweite Zeitbasis verwendet und von der Netzwerkkarte der externen Recheneinheit durch den sog. Hypervisor hindurchgereicht.

Die Genauigkeit des PTP-Netzwerkprotokolls übersteigt im Allgemeinen die Genauigkeit einer sicheren Zeitprüfung in einem Sicherheitsprogramm des Steuerprogramms und wird daher zusätzlich überwacht.

Gemäß einer zweckmäßigen Ausgestaltung wird die zweite Zeitbasis durch Broadcasting von Zeittelegrammen von der Netzwerkkomponente des Kommunikationsnetzwerks bereitgestellt. Dies ermöglicht es mehreren, auf der externen Recheneinheit ablaufenden Steuerprogrammen eine sichere Zeitbasis zu verarbeiten.

Insbesondere erfolgt die Netzwerkkommunikation als Layer-2 UDP Broadcast.

Eine zweckmäßige Ausgestaltung sieht vor, dass die Zeittelegramme über eine Netzwerkkommunikation in einem vorgegebenen, festen Takt in dem Kommunikationsnetzwerk oder innerhalb der externen Recheneinheit verteilt werden. Dies ermöglicht es dem auf der externen Recheneinheit ablaufenden Steuerprogramm verschiedene Prüfungen vorzunehmen, ob die erste Zeitbasis korrekt arbeitet oder nicht.

Eine weitere zweckmäßige Ausgestaltung sieht vor, dass die Zeittelegramme in einem Umlaufspeicher der externen Recheneinheit gespeichert werden, wobei in dem Umlaufspeicher eine vorgegebene Anzahl der zuletzt empfangenen Zeittelegramme gespeichert wird. Insbesondere ist es ausreichend, um die erforderlichen Prüfungen für die Überprüfung der ersten Zeitbasis durchzuführen, das letzte und das vorletzte empfangene Zeittelegramm in dem Umlaufspeicher vorzuhalten. Die vorgegebene Anzahl kann jedoch auch größer als zwei sein.

Gemäß einer weiteren zweckmäßigen Ausgestaltung wird als eine Überprüfung der Drift der ersten und der zweiten Zeitbasis berechnet. Für die Berechnung wird der bekannte Christians-Algorithmus verwendet.

Gemäß einer weiteren zweckmäßigen Ausgestaltung wird durch das Steuerprogramm die Zeit, die ein jeweiliges Zeittelegramm der zweiten Zeitbasis zwischen dem Aussenden durch die Netzwerkkomponenten und dem Empfang des Steuerprogramms benötigt, ermittelt. Auch hierdurch wird eine Überprüfung ermöglicht, ob Fehler bei der ersten Zeitbasis auftreten, welche von dem Steuerprogramm für einen bestimmungsgemäßen Ablauf verwendet wird. Insbesondere ist vorgesehen, zu überprüfen, ob die ermittelte Zeit ein vorgegebenes Zeitkriterium einhält.

Eine weitere zweckmäßige Ausgestaltung sieht vor, dass die Genauigkeit der zweiten Zeitbasis durch die Verarbeitung der Häufigkeit eines empfangenen Zeittelegramms und/oder die Übertragungszeit für ein empfangenes Zeittelegramm und/oder die Datenmenge bestimmt wird. Da generell eine sehr geringe Datenmenge für jedes Zeittelegramm benötigt wird, ergibt sich eine geringe Belastung innerhalb des Kommunikationsnetzwerks zur Bereitstellung der zweiten Zeitbasis.

Ein jeweiliges Zeittelegramm der zweiten Zeitbasis umfasst zweckmäßigerweise neben der Uhrzeit der Netzwerkkomponente des Kommunikationsnetzwerks einen Kennzeichner der das zweite Zeittelegramm sendenden Netzwerkkomponente. Der Kennzeichner kann dann von Bedeutung sein, wenn mehrere Netzwerkkomponenten dazu verwendet werden, eine zweite Zeitbasis innerhalb des Kommunikationsnetzwerks bereitzustellen. Insbesondere wird der Kennzeichner des Zeittelegramms ausgewertet, um zu prüfen, ob die darin enthaltene Zeit als zweite Zeitbasis verwendet werden darf.

Es ist weiterhin zweckmäßig, wenn der Takt, mit dem die Zeittelegramme der zweiten Zeitbasis gesendet werden, durch eine Sicherheitsroutine des Steuerprogramms ausgewertet wird. In diesem Fall ist sichergestellt, dass immer eine Überprüfung der Korrektheit der ersten Zeitbasis vorgenommen werden kann. Die Sicherheitsroutine wird auch als F-Zyklus bezeichnet. Insbesondere liest die Sicherheitsroutine das letzte und das vorletzte Zeittelegramm aus und berechnet den Drift und/oder eine Änderung im Offset zwischen der ersten und der zweiten Zeitbasis.

Gemäß einem zweiten Aspekt wird ein Computerprogrammprodukt vorgeschlagen, das Befehle umfasst, die bei der Ausführung des Programms durch einen Computer diesen veranlassen, das erfindungsgemäße Verfahren gemäß einer oder mehrerer Ausgestaltungsformen auszuführen.

Gemäß einem dritten Aspekt der vorliegenden Erfindung wird eine steuerbare Maschine mit einer internen Steuereinheit zur Steuerung der Maschine vorgeschlagen, wobei die interne Steuereinheit dazu eingerichtet ist, mit einem Steuerprogramm zum Betrieb der Maschine zu interagieren, wobei das Steuerprogramm auf einer externen Recheneinheit ausgeführt wird, die über eine Kommunikationsverbindung eines Kommunikationsnetzwerks zum Übertragen von Informationen für die Steuerung der Maschine mit der internen Steuereinheit verbunden ist. Die Maschine ist dazu eingerichtet, ein Verfahren gemäß einer oder mehrerer Ausgestaltungsvarianten der Erfindung auszuführen.

Die Erfindung wird nachfolgend näher anhand eines Ausführungsbeispiels in der Zeichnung beschrieben. Es zeigen:

Fig. 1    eine schematische Darstellung einer erfindungsgemäßen steuerbaren Maschine zur Durchführung des erfindungsgemäßen Verfahrens; und

Fig. 2    eine schematische Darstellung eines Ablaufplans, der die Übertragung von Takten der zweiten Zeitbasis in Relation zu den Takten der ersten Zeitbasis zeigt.

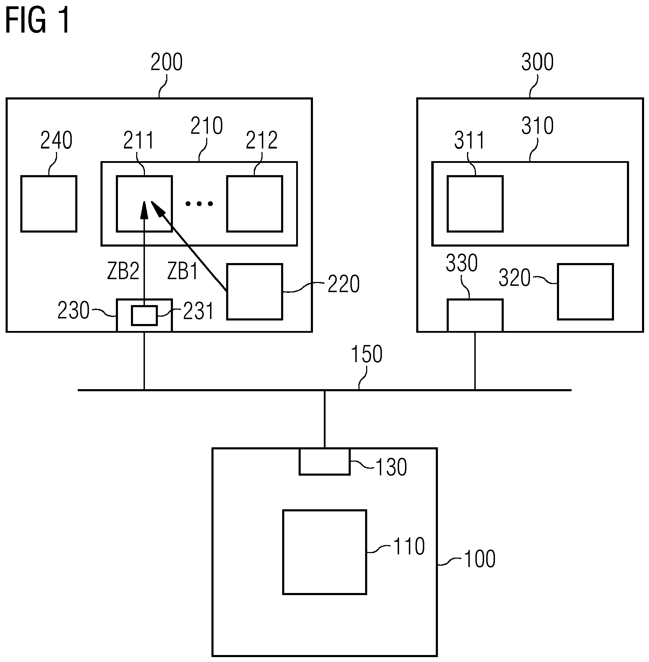

Fig. 1 zeigt eine schematische Darstellung einer erfindungsgemäßen steuerbaren Maschine 100, die dazu eingerichtet ist, das nachfolgend beschriebene, erfindungsgemäße Verfahren durchzuführen. Bei der Maschine 100 handelt es sich beispielsweise um ein führerloses Transportsystem (AGV), einen Roboter, eine Werkzeugmaschine, eine Produktionsmaschine, eine chemisches oder verfahrenstechnisches Prozesssteuerung, oder einzelne oder mehrere miteinander verbundene Komponenten der genannten Systeme.

Die Maschine umfasst eine interne Steuereinheit 110 und eine Anzahl an in Fig. 1 nicht dargestellten Komponenten, wie z.B. Sensoren und/oder Aktoren zur Realisierung einer Maschineneinheit. Die einzelnen Komponenten der Maschine 100 werden durch die interne Steuereinheit 110 mit Hilfe von verschiedenen Maschinensteuerungsfunktionen gesteuert. Hierzu können eine oder mehrere Maschinensteuerungsfunktionen in der internen Steuereinheit oder einer mit dieser verbundenen, nicht dargestellten Speichereinheit hinterlegt sein. Zur Ausführung einer jeweiligen Maschinensteuerungsfunktion benötigt die interne Steuereinheit 110 Parameter und/oder Steuerkommandos.

Die Parameter und/oder Steuerkommandos werden von einer externen Recheneinheit 200 bereitgestellt, die die interne Steuereinheit 110 der Maschine 100 von der externen Recheneinheit 200 empfängt. Parameter sind beispielsweise Vorgabe-Werte für die Aktoren, wie z.B. eine Sollgeschwindigkeit, eine Kraft, eine Drehgeschwindigkeit, ein Druck, usw. Die Steuerkommandos umfassen beispielsweise Kommandos, wie z.B. einen Schwellwertvergleich, usw. Durch die Verarbeitung der Parameter und/oder Steuerkommandos kann die interne Steuereinheit 110 ihre bestimmungsgemäße Funktion übernehmen. Weiterhin kann die interne Steuereinheit 110 der externen Recheneinheit 200 von den Sensoren erfasste Sensorwerte übertragen.

Die externe Recheneinheit 200 umfasst einen Prozessor 210, eine interne Uhr 220, eine Netzwerkkarte 230 (als Netzwerkkomponente) sowie einen (Umlauf-)Speicher 240. Die externe Recheneinheit 200 ist über die Netzwerkkarte 230 an eine Kommunikationsverbindung eines Kommunikationsnetzwerks 150, z.B. eine leitungsgebundene oder drahtlose Busverbindung oder direkte Kommunikationsverbindung zum Übertragen von Informationen, mit der internen Steuereinheit 110 verbunden. Auf dem Prozessor 210 werden ein Steuerprogramm 211 und optional zumindest ein weiteres Steuerprogramm 212 ausgeführt. Das Steuerprogramm 211 und das optionale, zumindest eine weitere Steuerprogramm 212 stellen jeweils eine virtualisierte Automatisierungsfunktion oder Steuerungsfunktion (Software-definierte Steuerung, Cloudbasierte Steuerung) dar.

Für die Ausführung des Steuerprogramms 211 sowie des zumindest einen weiteren Steuerprogramms 212 ist die Bereitstellung einer sicheren Zeitbasis (Zeitfunktion) erforderlich, die z.B. Anwenderzeiten wie Einschaltverzögerung, Überwachungszeit oder F-Zyklus-Zeitüberwachung umfasst. Dies erfolgt über zwei unabhängige Timer, wobei eine erste Zeitbasis ZB1 von der internen Uhr 220 der externen Recheneinheit 200 bereitgestellt wird. Eine zweite Zeitbasis ZB2 wird dem Steuerprogramm 211 sowie dem zumindest einen weiteren Steuerprogramm 212 von einer internen Uhr 231 einer Netzwerkkomponente des Kommunikationsnetzwerks 150 bereitgestellt. Als Netzwerkkomponenten kann beispielsweise die Netzwerkkarte 230 der externen Recheneinheit 200 dienen.

Als die die zweite Zeitbasis ZB2 bereitstellende Netzwerkkomponente kann auch eine weitere externe Recheneinheit 300 genutzt werden. Eine solche externe Recheneinheit 300 umfasst, in ähnlicher Weise wie die externe Recheneinheit 200, einen Prozessor 310, auf dem ein oder mehrere Steuerprogramme 311 ausgeführt werden, eine interne Uhr 320 sowie eine Netzwerckarte 330. Die zweite Zeitbasis kann beispielsweise von der internen Uhr 320 der weiteren, externen Recheneinheit bereitgestellt werden. Alternativ könnte die zweite Zeitbasis ZB2 auch durch eine (hier nicht dargestellte) interne Uhr der Netzwerkkarte 330 der weiteren, externen Recheneinheit 300 bereitgestellt werden.

Die von der Netzwerkkomponente 230 oder 300 des Kommunikationsnetzwerks 150 bereitgestellte zweite Zeitbasis ZB2 ist unabhängig von der ersten Zeitbasis ZB1. Dies bedeutet, die erste Zeitbasis ZB1 und die zweite Zeitbasis ZB2 sind nicht miteinander synchronisiert.

Die von einer Netzwerkkomponente, welche mit der steuerbaren Maschine zum Austausch von Daten miteinander verbunden ist, bereitgestellte zweite Zeitbasis ZB2 nutzt insbesondere eine standardisierte Schnittstelle IEEE 1588 des PTP-Netzwerkprotokolls unter Linux. Die Genauigkeit des PTP-Netzwerkprotokolls übersteigt in der Regel die Genauigkeit einer sicheren Zeitprüfung in einem Sicherheitsproblem des Steuerprogramms 211 (und auch des zumindest einen optionalen Steuerprogramms 212) und wird daher zusätzlich überwacht.

In der weiteren Beschreibung wird davon ausgegangen, dass die die zweite Zeitbasis ZB2 bereitstellende Netzwerkkomponente die interne Uhr 231 der Netzwerkkarte 230 ist, wobei das nachfolgend beschriebene Vorgehen jedoch in entsprechender Weise gültig ist, wenn die zweite Zeitbasis ZB2 von der weiteren, externen Recheneinheit 300 bereitgestellt wird.

Vorzugsweise wird die zweite Zeitbasis ZB2 durch Broadcasting von Zeittelegrammen ZT von der Netzwerkkomponente 230 bereitgestellt. Dies ermöglicht es, einer Mehrzahl von Steuerprogrammen 211 und 212, die auf dem Prozessor 210 der externen Recheneinheit 200 ausgeführt werden, eine sichere Zeitbasis zu verarbeiten. Vorzugsweise erfolgt die Netzwerkkommunikation als Layer-2 UDP-Broadcast. Es können jedoch auch andere Netzwerkkommunikationen genutzt werden. Ein weiterer Vorteil eines Broadcasts besteht darin, dass alle Teilnehmer zuhören können und so kein Verbindungsaufbau zwischen den einzelnen Steuerprogrammen 211 bzw. 212 und dem zweiten Zeitgeber, der Netzwerkkarte 230, notwendig ist. Dadurch ist die Kommunikationslast unabhängig von der Anzahl der Steuerprogramme 211, 212, die ihre sichere Zeit über die empfangenen Informationen in dem Broadcast bilden.

In einer weiteren Ausgestaltung kann zur Erhöhung der Verfügbarkeit der zweiten Zeitbasis ZB 2 ein zweiter Broadcast ablaufen, der im Falle des Ausfalls des Zeitgebers der zweiten Zeitbasis ZB2, hier der Netzwerkkarte 230, die externe Zeitgebung gewährleisten kann. Dies könnte z.B. die weitere, externe Recheneinheit 300 sein.

Die von der Netzwerkkarte 230 ausgesendeten Zeittelegramme ZT umfassen neben der Uhrzeit der Netzwerkkomponente (d.h. der internen Uhr 231) einen Kennzeichner der Netzwerkkomponenten/Netzwerkkarte 230 und werden in einem vorgegebenen, festen Takt in dem Kommunikationsnetzwerk 150 oder innerhalb der externen Recheneinheit 200 verteilt. Die Aussendung der Zeittelegramme ZT in einem vorgegebenen, festen Takt ermöglicht es den Steuerprogrammen 211 bzw. 212 verschiedene Prüfungen vorzunehmen, ob die von der internen Uhr 220 der externen Recheneinheit 200 bereitgestellte erste Zeitbasis ZB1 korrekt arbeitet oder nicht.

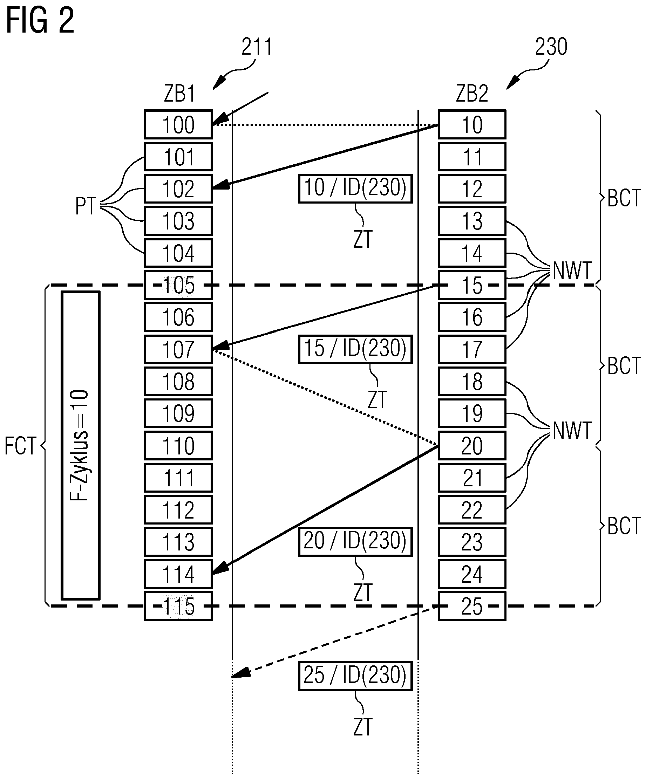

Um die Überprüfung, ob die erste Zeitbasis ZB1 korrekt ist oder nicht, vornehmen zu können, werden die Zeittelegramme in dem Umlaufspeicher 240 der externen Recheneinheit 200 gespeichert. Insbesondere wird in dem Umlaufspeicher 240 eine vorgegebene Anzahl der zuletzt empfangenen Zeittelegramme gespeichert, wobei es ausreichend ist, wenn das letzte und das vorletzte empfangene Zeittelegramm ZT (Fig. 2) in dem Umlaufspeicher für die Überprüfung enthalten sind.

Im Rahmen der Überprüfung wird der Drift der ersten Zeitbasis ZB1 und der zweiten Zeitbasis ZB2 über bekannte Berechnung des Christians-Algorithmus berechnet. Da sich aus der nicht vernachlässigbaren Kommunikationszeit zwischen dem Zeitgeber der zweiten Zeitbasis ZB2, hier der Netzwerkkarte 230, und dem Empfänger, hier dem Prozessor 210 bzw. den darauf ablaufenden Steuerprogrammen 211 bzw. 212, der Uhrendrift als fehlerbehaftete Größe ergibt, muss sichergestellt werden, dass sich das ermittelte Driftfenster in einem vorgegebenen Toleranzbereich befindet.

Hierzu werden verschiedene, nachfolgend beschriebene Prüfungen durchgeführt, die das Netzwerk auf seine Kommunikationszeit prüfen (und dadurch eine Begrenzung des Fehlers der Messung feststellen. Die Genauigkeit der ersten und der zweiten Zeitbasis ZB1, ZB2 wird bestimmt durch die Häufigkeit der empfangenen Zeittelegramme ZT, die Übertragungszeit für die Übertragung eines Zeittelegramms und die erforderliche Datenmenge. Da generell eine sehr geringe Datenmenge für jedes Zeittelegramm ZT notwendig ist, ergibt sich eine geringe Belastung innerhalb des Kommunikationsnetzwerks 150.

Grundsätzlich können für die Übertragung der zweiten Zeitbasis ZB2 innerhalb des Kommunikationsnetzwerks 150 alle bekannten Kommunikationsprotokolle genutzt werden. Beim bevorzugten Broadcasting der Zeittelegramme der zweiten Zeitbasis ZB2 kann ein Zeitgeber für mehrere Empfänger (das Steuerprogramm 211 und das zumindest eine weitere Steuerprogramm 212 der externen Recheneinheit 200) genutzt werden, ohne die Netzwerklast zu erhöhen.

Die Berechnung des Drifts der ersten Zeitbasis ZB1, welche von der internen Uhr 220 der externen Recheneinheit 200 bereitgestellt wird und des Zeitgebers, der die zweite Zeitbasis ZB2 bereitstellt, wird nachfolgend anhand Fig. 2 beschrieben.

In Fig. 2 sind auf der linken Seite Prozessortakte PT der internen Uhr 220 der externen Prozessoreinheit 200 dargestellt, welche von dem Steuerprogramm 211 als erste Zeitbasis ZB1 verarbeitet werden. Die Prozessortakte PT starten mit 100 und sind aufeinanderfolgend bis 115 dargestellt. Die Zahlen "100", ..., "115" repräsentieren die aktuelle Uhrzeit der internen Uhr 220, wie diese von dem Steuerprogramm 211 empfangen wird.

Auf der rechten Seite sind Netzwerkkomponententakte NWT der internen Uhr 231 der Netzwerkkarte 230 zur Bereitstellung der zweiten Zeitbasis ZB2 dargestellt. Die Netzwerkkomponententakte NWT starten mit 10 und sind aufeinanderfolgend bis 25 dargestellt. Die Zahlen "10", ..., "25" repräsentieren die aktuelle Uhrzeit der internen Uhr 231 der Netzwerkkarte 230.

Die aktuelle Uhrzeit der internen Uhr 231 der Netzwerkkarte 230 wird in einem fest vorgegebenen Takt, der als Broadcast-Zyklus BCT gekennzeichnet ist, an das Kommunikationsnetzwerk bzw. die externe Recheneinheit 200 übertragen. In einem jeweiligen Zeittelegramm ZT sind die aktuelle Uhrzeit sowie ein Kennzeichner ID, der den Sender der zweiten Zeitbasis ZB2 identifiziert, enthalten. Der Kennzeichner ID wird bei der Auswertung verarbeitet. Der Kennzeichner ID zeigt an, dass das Zeittelegramm ZT ein Telegramm zur Verwendung als zweite Zeit ist und von welcher Netzwerkkomponente, die eine zweite Zeitbasis bereitstellt (hier: 230 oder 300), es kommt.

In dem hier gezeigten Ausführungsbeispiel wird von der internen Uhr 231 der Netzwerkkarte 230 in einem festen Takt von fünf Zeiten gesendet. Der Empfänger, d.h. das Steuerprogramm 211, empfängt die Zeittelegramme ZT der Zeiten 10, 15, 20 und 25 mit dem Kennzeichner ID(230) der Netzwerkkarte 230 nacheinander. Das Steuerprogramm 211 als Empfänger kann somit für jedes empfangene Datenpaket n die Zeit des Broadcasts (10, 15, 20, 25) und seine eigene Zeit (102, 107, 114) in dem Umlaufspeicher 240 abspeichern.

Wird nun ein Sicherheitsprogramm des Steuerprogramms 211 aufgerufen, so kann dieses als F-Programm FCT bezeichnete Sicherheitsprogramm den letzten und den vorletzten aktuellen Datensatz aus dem Umlaufspeicher 240 auslesen und den Drift bzw. die Änderung im Offset (absoluter Unterschied) der beiden Zeiten (Timer) berechnen.

Das Offset $\Delta_n$ und der Fehler $e_n$, der eine Unsicherheit aufgrund der Kommunikationsstrecke zwischen Sender und Empfänger darstellt, der beiden Timer wird folgendermaßen nach dem bekannten Christians-Algorithmus für asymmetrische Kommunikation berechnet. Der Christians-Algorithmus ist allgemein bekannt für PTP-Synchronisierung und wird für die sogenannte Request-Response-Kommunikation verwendet.

$$\Delta_n = (\ 2 * T_{broadcast}(n) - T_{Empfänger}(n-1) - T_{Empfänger}(n)\ )\ /\ 2$$

$$e_n = (\ T_{Empfänger}(n) - T_{Empfänger}(n-1)\ )\ /\ 2$$

Für das Zeittelegramm ZT der Zeit 10 in Fig. 2 gilt demnach:

$$\Delta_1 \pm e_1 = (\ 2 * 10 - 100 - 102\ )\ /\ 2 \pm (\ 102 - 100\ )\ /\ 2 = -91 \pm 1$$

Das wahre Offset der beiden Timer liegt somit sicher im Intervall [-92; -90].

Erfolgt der nächste Weckalarm des F-Programms FCT, können wieder der letzte und vorletzte Datensatz aus dem Umlaufspeicher 240 ausgelesen werden. Dies sind die Zeittelegramme ZT mit den Zeiten 20 und 15.

$$\Delta_2 \pm e_2 = (\ 2 * 20 - 107 - 114\ )\ /\ 2 \pm (\ 114 - 107\ )\ /\ 2 = -90.5 \pm 3{,}5$$

Das wahre Offset der beiden Timer liegt hier sicher im Intervall [-94; -87].

Die Netzwerkverzögerung ist normalverteilt und akkumuliert um einen minimalen Wert. Eine Kommunikationszeit von 0 ist physikalisch und technisch nicht möglich. Aufgrund der Netzwerkverzögerung ergibt sich für die Bestimmung der zweiten Zeitbasis eine Unsicherheit, die sich im Fehler des Offsets widerspiegelt. Um eine Veränderung des Offsets festzustellen, werden die Offsets von F-Zyklus zu F-Zyklus FCT miteinander verglichen und das Offset-Drift berechnet:

$$\Delta'_{n,n-1} = (\ \Delta_n - \Delta_{n-1}\ ) \pm (e_n + e_{n-1})\ ;$$

$$\Delta'_{2,1} = (\ \Delta_2 - \Delta_1\ ) \pm (e_2 + e_1) = (\ -90{,}5 + 91\ ) \pm (\ 3{,}5 + 1) = 0{,}5 \pm 4{,}5$$

Der wahre Wert des Offset-Drifts befindet sich in diesem Beispiel damit sicher im Intervall [-4; 5]. Dieser Wert wird mit einer vorgegebenen Toleranz verglichen.

## Patentansprüche

1. Verfahren zum Bereitstellen einer sicheren Zeitbasis für ein Steuerprogramm (211, 212) zum Betrieb einer steuerbaren Maschine (100), welche eine interne Steuereinheit (110) zur Steuerung der Maschine (100) umfasst, wobei das Steuerprogramm (211, 212) auf einer externen Recheneinheit (200) ausgeführt wird, die über eine Kommunikationsverbindung eines Kommunikationsnetzwerks (150) zum Übertragen von Informationen für die Steuerung der Maschine (100) mit der internen Steuereinheit (110) verbunden ist, bei dem

   - dem Steuerprogramm (211, 212) eine erste Zeitbasis (ZB1) von einer internen Uhr (220) der externen Recheneinheit (200) bereitgestellt wird, und
   - dem Steuerprogramm (211, 212) eine zweite Zeitbasis (ZB2), die unabhängig von der ersten Zeitbasis (ZB1) ist, von einer internen Uhr (231, 320) einer Netzwerkkomponente (230, 300) des Kommunikationsnetzwerks (150), insbesondere einer Netzwerkkarte (231), einer weiteren externen Recheneinheit (300) oder einem PTP-Grandmaster, bereitgestellt wird.

2. Verfahren nach Anspruch 1, bei dem die zweite Zeitbasis (ZB2) durch Broadcasting von Zeittelegrammen (ZT) von der Netzwerkkomponente (230, 300) des Kommunikationsnetzwerks (150) bereitgestellt wird.

3. Verfahren nach Anspruch 2, bei dem die Netzwerkkommunikation als Layer-2 UDP Broadcast erfolgt.

4. Verfahren nach einem der vorhergehenden Ansprüche, bei dem die Zeittelegramme (ZT) über eine Netzwerkkommunikation in einem vorgegebenen, festen Takt (BCT) in dem Kommunikationsnetzwerk (150) oder innerhalb der externen Recheneinheit (200) verteilt werden.

5. Verfahren nach einem der vorhergehenden Ansprüche, bei dem die Zeittelegramme (ZT) in einem Umlaufspeicher (240) der externen Recheneinheit (200) gespeichert werden, wobei in dem Umlaufspeicher (240) eine vorgegebene Anzahl der zuletzt empfangenen Zeittelegramme (ZT) gespeichert wird.

6. Verfahren nach einem der vorhergehenden Ansprüche, bei dem der Drift der ersten und zweiten Zeitbasis (ZB1, ZB2) über den Christians-Algorithmus berechnet wird.

7. Verfahren nach einem der vorhergehenden Ansprüche, bei dem durch das Steuerprogramm (211, 212) die Zeit, die ein jeweiliges Zeittelegramm (ZT) der zweiten Zeitbasis (ZB2) zwischen dem Aussenden durch die Netzwerkkomponente (230, 300) und dem Empfang das Steuerprogramm (211, 212) benötigt, ermittelt wird.

8. Verfahren nach Anspruch 7, bei dem die ermittelte Zeit auf die Einhaltung eines vorgegebenen Zeitkriteriums überprüft wird.

9. Verfahren nach einem der vorhergehenden Ansprüche, bei dem die Genauigkeit der zweiten Zeitbasis (ZB2) durch die Verarbeitung der Häufigkeit eines empfangenen Zeittelegramms und/oder die Übertragungszeit für ein empfangenes Zeittelegramm und/oder die Datenmenge bestimmt wird.

10. Verfahren nach einem der vorhergehenden Ansprüche, bei dem ein jeweiliges Zeittelegramm (ZT) der zweiten Zeitbasis (ZB2) neben der Uhrzeit der Netzwerkkomponente (230, 300) des Kommunikationsnetzwerks einen Kennzeichner (ID) der das zweite Zeittelegramm (ZB2) sendenden Netzwerkkomponente (230, 300) umfasst.

11. Verfahren nach Anspruch 10, bei dem der Kennzeichner (ID) des Zeittelegramms (ZT) ausgewertet wird, um zu prüfen, ob die darin enthaltene Zeit als zweite Zeitbasis (ZB2) verwendet werden darf.

12. Verfahren nach einem der vorhergehenden Ansprüche, bei dem der Takt (BCT), mit dem die Zeittelegramme (ZT) der zweiten Zeitbasis (ZB2) gesendet werden, durch eine Sicherheitsroutine des Steuerprogramms (211, 212) ausgewertet wird.

13. Verfahren nach Anspruch 12, bei dem die Sicherheitsroutine das letzte und das vorletzte Zeittelegramm ausliest und den Drift und/oder eine Änderung im Offset zwischen der ersten und der zweiten Zeitbasis (ZB1, ZB2) berechnet.

14. Computerprogrammprodukt, umfassend Befehle, die bei der Ausführung des Programms durch einen Computer diesen veranlassen, die Schritte des Verfahrens nach einem der vorhergehenden Ansprüche 1 bis 13 auszuführen.

15. Steuerbare Maschine mit einer internen Steuereinheit (110) zur Steuerung der Maschine (100), wobei die interne Steuereinheit (110) dazu eingerichtet ist, mit einem Steuerprogramm (211, 212) zum Betrieb der Maschine (100) zu interagieren, wobei das Steuerprogramm (211, 212) auf einer externen Recheneinheit (200) ausgeführt wird, die über eine Kommunikationsverbindung eines Kommunikationsnetzwerks (150) zum Übertragen von Informationen für die Steuerung der Maschine (100) mit der internen Steuereinheit (110) verbunden ist, wobei die Maschine (100) dazu einrichtet ist, ein Verfahren auszuführen, bei dem

- dem Steuerprogramm (211, 212) eine erste Zeitbasis (ZB1) von einer internen Uhr (220) der externen Recheneinheit (200) bereitgestellt wird, und
- dem Steuerprogramm (211, 212) eine zweite Zeitbasis (ZB2), die unabhängig von der ersten Zeitbasis (ZB1) ist, von einer internen Uhr (231, 320) einer Netzwerkkomponente (230, 300) des Kommunikationsnetzwerks (150), insbesondere einer Netzwerkkarte (231), einer weiteren externen Recheneinheit (300) oder einem PTP-Grandmaster, bereitgestellt wird.

16. Maschine nach Anspruch 15, **dadurch gekennzeichnet, dass** diese ferner dazu eingerichtet ist, ein Verfahren gemäß einem der Ansprüche 2 bis 13 auszuführen.

FIG 1

# FIG 2

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2018/109655 A1 (ICHIMURA KATSUHIKO [JP] ET AL) 19. April 2018 (2018-04-19) * Absatz [0009] - Absatz [0018]; Ansprüche 1-9; Abbildungen 1-5 * ----- | 1-16 | INV. G05B19/042 |
| X | US 2022/413474 A1 (NISHIYAMA YOSHIHIDE [JP] ET AL) 29. Dezember 2022 (2022-12-29) * Absatz [0203] - Absatz [0223]; Ansprüche 1-8; Abbildungen 10a, 10b * ----- | 1-16 | |
| X | US 11 599 090 B2 (ROCKWELL AUTOMATION TECH INC [US]) 7. März 2023 (2023-03-07) * Anspruch 1; Abbildung 3 * ----- | 1-16 | |

**RECHERCHIERTE SACHGEBIETE (IPC)**

G05B

Der vorliegende Recherchenbericht wurde für alle Patentansprüche erstellt

| Recherchenort | Abschlußdatum der Recherche | Prüfer |
|---|---|---|
| München | 18. November 2024 | Rakoczy, Tobias |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 17 9859

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-11-2024

| Im Recherchenbericht angeführtes Patentdokument | Datum der Veröffentlichung | Mitglied(er) der Patentfamilie | Datum der Veröffentlichung |
|---|---|---|---|
| US 2018109655 A1 | 19-04-2018 | CN 107959564 A<br>EP 3309647 A1<br>JP 6753262 B2<br>JP 2018064219 A<br>US 2018109655 A1 | 24-04-2018<br>18-04-2018<br>09-09-2020<br>19-04-2018<br>19-04-2018 |
| US 2022413474 A1 | 29-12-2022 | CN 114080574 A<br>EP 3995910 A1<br>JP 7484912 B2<br>JP WO2021002421 A1<br>US 2022413474 A1<br>WO 2021002421 A1 | 22-02-2022<br>11-05-2022<br>16-05-2024<br>07-01-2021<br>29-12-2022<br>07-01-2021 |
| US 11599090 B2 | 07-03-2023 | EP 3979527 A1<br>US 2022100172 A1 | 06-04-2022<br>31-03-2022 |